# EUROPÄISCHE PATENTANMELDUNG

(11) **EP 1 820 993 A1**
(43) Veröffentlichungstag der Anmeldung: **22.08.2007**
(21) Anmeldenummer: 07001231.5
(22) Anmeldetag: 20.01.2007
(51) Int. Cl.: F16F 1/38

(54) **Elastisches Lager, insbesondere für den Nutzfahrzeugbau**

(30) Priorität: 16.02.2006 DE 102006007161
(71) Anmelder: Jörn GmbH, 71336 Waiblingen (DE)
(72) Erfinder: Zawadzki, Bernd, 71409 Schwaikheim (DE)
(74) Vertreter: Neubauer, Hans-Jürgen

(57) **Zusammenfassung**

Die Erfindung betrifft ein elastisches Lager, insbesondere für den Nutzfahrzeugbau, mit einem Elastomer-Metallteil, bestehend aus einem inneren Metallteil (3; 27; 37) als ersten Lagerteil, aus wenigstens einer das innere Metallteil (3; 27; 37) zumindest teilweise umgebenden Elastomerschicht (4; 28; 40; 40'), aus wenigstens einem die Elastomerschicht (4; 28; 40, 40') zumindest teilweise umgebenden äußeren Metallteil (5; 30; 39, 39'), und mit einem zumindest einseitig in Richtung einer Lagerachse offenen Lagergehäuse (6; 25; 36), in das das Elastomer-Metallteil unter Komprimierung und Aufbau einer Vorspannung in der Elastomerschicht (4; 28; 40, 40') eingepresst ist, wobei im eingepressten Zustand zumindest ein Stirnseitenbereich des äußeren Metallteils (5; 30; 39, 39') im Stirnseitenbereich des Lagergehäuses (6; 25; 36) liegt. Erfindungsgemäß ist in den zumindest einen äußeren Stirnseitenbereich des wenigstens einen dickwandig hergestellten, äußeren Metallteils (5; 30; 39, 39') in Axialrichtung eine Nut (19, 19'; 32, 32'; 42, 42') unter Ausbildung eines radial äußeren Randstegs (20; 43, 43') eingearbeitet. Dieser Randsteg (20; 43, 43') steht im Herstellzustand und beim Einpressvorgang in das Lagergehäuse (6; 25; 36) axial ab und wird nach dem Einpressvorgang als Bördelrand (21; 33, 33'; 44, 44') zumindest abschnittweise auf den Stirnseitenbereich des Lagergehäuses (6; 25; 36) nach radial außen umgebördelt. Dadurch wird einfach und kostengünstig eine Axialabstützung und Axialsicherung geschaffen.

## Beschreibung

Die Erfindung betrifft ein elastisches Lager, insbesondere für den Nutzfahrzeugbau, nach dem Oberbegriff des Anspruchs 1.

Ein bekanntes, gattungsgemäßes elastisches Lager als Gelenklager für einen Achslenker eines Kraftfahrzeugs besteht aus einem Elastomer-Metallteil mit einem inneren Metallteil als ersten Lagerteil, mit wenigstens einer, das innere Lagerteil zumindest teilweise umgebenden Elastomerschicht und mit wenigstens einem die Elastomerschicht zumindest teilweise umgebenden äußeren Metallteil. Weiter besteht das elastische Lager aus einem zumindest einseitig in Richtung einer Lagerachse offenen Lagergehäuse, in das das Elastomer-Metallteil unter Komprimierung und Aufbau einer Vorspannung in der Elastomerschicht eingepresst ist, wobei im eingepressten Zustand zumindest ein Stirnseitenbereich des äußeren Metallteils im Stirnseitenbereich des Lagergehäuses liegt.

Konkret sind hier das innere Metallteil und das Lagergehäuse als Aufnahmeauge zylindrisch ausgeführt, wobei am inneren Metallteil die Elastomerschicht als umfangsseitig umlaufende Gummischicht aufvulkanisiert ist. Zudem ist auf die Elastomerschicht ein umlaufendes Außenblech aufvulkanisiert und in die Elastomerschicht sind Zwischenbleche eingebettet. Die Elastomerschicht ist hier im mittleren Längsbereich geteilt, so dass zwei beabstandete Elastomerbuchsen ausgebildet sind, zwischen denen ein am inneren Metallteil umlaufender Anschlagring angeordnet ist. Die Elastomerschicht mit ihrem Außenblech wird hier von einem aufgesteckten äußeren Metallteil umgeben, das als dünnwandiges Montageblechrohr ausgebildet ist, welches insbesondere den Einpressvorgang in das Aufnahmeauge vergleichmäßigt und dabei einen Schutz für die Elastomerschicht bildet. Dieses Blechrohr ist axial länger als das Aufnahmeauge hergestellt und steht somit nach dem Einpressvorgang mit Randstegen axial am Aufnahmeauge über. Für eine Axialabstützung und Axialsicherung des Montageblechrohrs und des unter Vorspannung stehenden Elastomer-Metallteils im Aufnahmeauge werden Teilabschnitte des Randstegs auf den Stirnseitenbereich des Aufnahmeauges nach radial außen umgebördelt.

Es sind weiter elastische Lager in ähnlichen Ausführungsformen allgemein bekannt, bei denen ein äußeres zumindest in den Stirnbereichen dickwandiges Metallteil verwendet ist, welches mit der Elastomerschicht festhaftend verbunden oder aufgesteckt ist. Solche dickwandigen äußeren Metallteile sind insbesondere dann verwendet, wenn in einem zylindrischen Aufnahmeauge ein Elastomer-Metallteil aufgenommen ist, in dem die Elastomerschicht und die Außenform des inneren Metallteils nicht zylindrisch, beispielsweise ballig oder schräg gestellt sind und der Übergang zum zylindrischen Aufnahmeauge durch entsprechende Formgebung im äußeren dickwandigen Metallteil hergestellt ist. Ersichtlich ist dann wegen der Dickwandigkeit des äußeren Metallteils eine Axialabstützung in der eingangs erläuterten Form nicht möglich.

Aufgabe der Erfindung ist es, ein gattungsgemäßes elastisches Lager so weiterzubilden, dass auch bei dickwandigen äußeren Metallteilen eine einfach ausführbare, kostengünstige und funktionssichere Axialabstützung und Axialsicherung möglich ist.

Diese Aufgabe wird mit den Merkmalen des Anspruchs 1 gelöst.

Gemäß Anspruch 1 ist in den zumindest einen äußeren Stirnseitenbereich des wenigstens einen dickwandig hergestellten äußeren Metallteils in Axialrichtung eine Nut unter Ausbildung eines radial äußeren Randstegs eingearbeitet, wobei dieser Randsteg im Herstellzustand und beim Einpressvorgang in das Lagergehäuse axial absteht und nach dem Einpressvorgang für eine Axialabstützung und Axialsicherung als Bördelrand zumindest abschnittweise auf den Stirnseitenbereich des Lagergehäuses nach radial außen umgebördelt ist.

Die Herstellung der vorgeschlagenen Nut ist einfach durchführbar und kann beispielsweise in nur einem Arbeitsgang mit der Herstellung des äußeren Metallteils durchgeführt werden, insbesondere wenn dieses als Drehteil hergestellt ist. Die Nuttiefe bzw. die Höhe des Randstegs kann für die Abstützfunktion des Bördelrands relativ klein sein, so dass die vorgeschlagene Axialabstützung keine grundsätzliche Änderung in der durch den Lageraufbau und Einsatzfall vorgegebenen Gestalt oder Dimensionierung des äußeren Metallteils erfordert. Die vorgeschlagene Axialsicherung ist somit erforderlichenfalls eine sehr einfache, äußerst kostengünstige und funktionswirksame Zusatzmaßnahme.

Je nach Lagerausführung können sich nach Anspruch 2 die Nut und damit der Bördelrand über die gesamte Länge angrenzender Stirnseitenbereiche oder nur über eine Teillänge angrenzender Stirnseitenbereiche des wenigstens einen äußeren Metallteils und des Lagergehäuses erstrecken, wodurch beispielsweise nur in Teilabschnitten die Nut angebracht und/oder der Randsteg zu einem Bördelrand umgebördelt ist.

Die vorgeschlagene Axialabstützung kann nach Anspruch 3 zweckmäßig nur an einem Stirnseitenbereich vorgesehen werden, wenn am anderen Stirnseitenbereich bereits ein Axialanschlag am äußeren Metallteil vorgesehen ist, der am Ende des Einpressvorgangs am Lagergehäuse anliegt.

In einer besonders vorteilhaften Ausführungsform nach Anspruch 4 steht das äußere Metallteil zumindest im Bördelrandbereich axial jeweils etwa um die Tiefe der Nut aus dem Lagergehäuse vor, wodurch der Randsteg einfach zu einem Bördelrand umgebördelt werden kann.

Mit Anspruch 5 wird die angegebene Axialabstützung in Verbindung mit einem insgesamt zylindrischen Lager vorgeschlagen, wobei das äußere Metallteil ein dickwandiges Außenrohrteil ist. Dieses kann nach Anspruch 6 insbesondere mehrteilig mit Längsschlitzen unmittelbar mit der Elastomerschicht verbunden sein oder nach Anspruch 7 aufgesteckt sein.

Weiter können nach Anspruch 8 in an sich bekannter Weise ein dünnwandiges Außenblech auf die Elastomerschicht aufvulkanisiert und/oder dünnwandige Zwischenbleche einvulkanisiert sein, in Verbindung mit wenigstens einem Längsschlitz, der sich beim Einpressvorgang und beim Aufbringen einer radialen Vorspannung schließt.

Mit Anspruch 9 wird vorgeschlagen, die angegebene Axialabstützung mittels eines Bördelrands in Verbindung mit einem nicht zylindrischen Aufbau eines elastischen Lagers zu realisieren. Das äußere dickwandige Metallteil ist hier mehrteilig ausgeführt und besteht aus wenigstens zwei bezüglich des inneren Metallteils gegenüberliegenden Außenstützteilen, wobei die Elastomerschicht ebenfalls mehrteilig in der Art von Elastomerpaketen ausgebildet ist, die mit dem inneren Metallteil und gegenüberliegend jeweils mit den Abstützteilen verbunden sind.

Solche Lagerausführungen sind nach Anspruch 10 als V-Lager oder X-Lager allgemein bekannt, wobei entweder zwei Elastomerpakete in Lagerachsrichtung gesehen eine V-Form oder vier Elastomerpakete eine X-Form bilden. Auch bei diesen Lagerausführungen ist die erfindungsgemäße Axialabstützung einfach, kostengünstig und funktionswirksam zu realisieren.

Bevorzugt wird als Elastomermaterial bei den vorgeschlagenen Lagerausführungen gemäß Anspruch 11 vulkanisierbares Gummimaterial verwendet.

Die erfindungsgemäß Axialabstützung ist in Verbindung mit an sich bekannten Lageranschlusstechniken einsetzbar, so dass nach Anspruch 12 am inneren Metallteil einseitig oder beidseitig Anschlusszapfen oder Anschlusspratzen angebracht sein können oder das innere Metallteil ist als Innenrohr zur Aufnahme einer Anschlussverschraubung oder eines Konuszapfens ausgeführt.

Anhand einer Zeichnung wird die Erfindung näher erläutert.

Es zeigen:
- Fig. 1: einen Längsschnitt durch ein montiertes elastisches Lager als zylindrisches Gelenklager,
- Fig. 2: einen Querschnitt entlang der Linie A-A durch eine Gelenkbuchse im Herstellzustand als Bestandteil des Gelenklagers nach Fig. 1, und
- Fig. 3: eine Ansicht in Blickrichtung B auf ein äußeres Metallteil als Außenrohrteil des Gelenklagers nach Fig. 1.
- Fig. 4: eine Draufsicht auf ein elastisches Lager als Zentralgelenklager eines Dreieckslenkers,

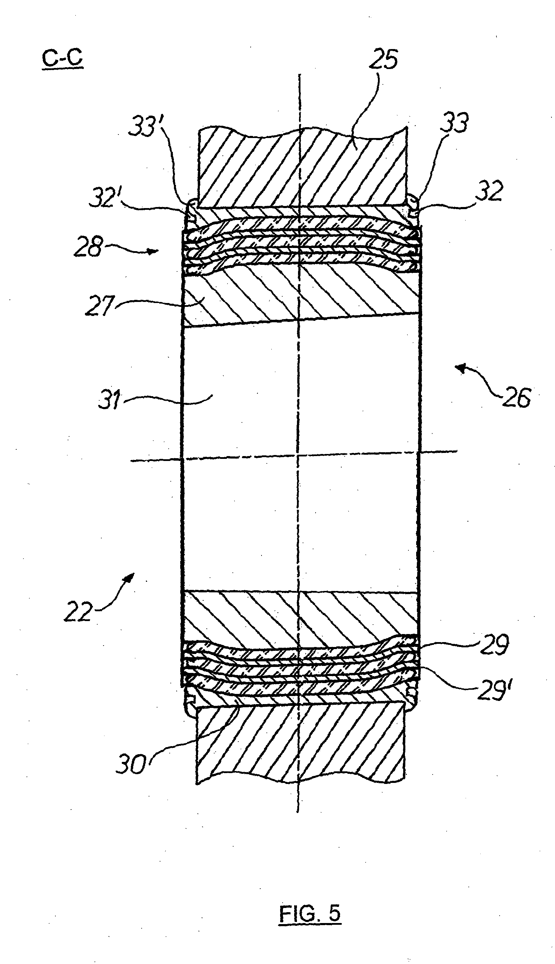

- Fig. 5: eine schematische Schnittansicht entlang der Linie C-C aus Fig. 4,
- Fig. 6: einen Längsschnitt durch ein montiertes elastisches Lager als V-Lager entlang der Linie D-D aus Fig. 7,
- Fig. 7: eine Draufsicht auf das V-Lager nach Fig. 6,
- Fig. 8: einen Längsschnitt durch das Elastomer-Metallteil aus Fig. 7 im Herstellzustand entlang der Line E-E aus Fig. 9, und
- Fig. 9: eine Draufsicht auf das Elastomer-Metallteil nach Fig. 8.

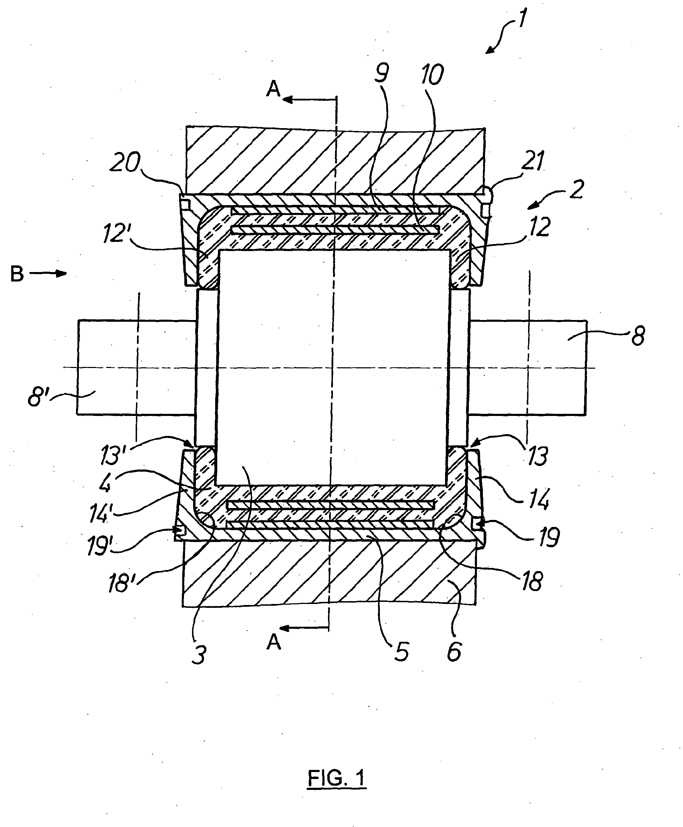

In Fig. 1 ist ein Längsschnitt durch ein elastisches Lager als zylindrisches Gelenklager 1 im fertig montierten Zustand dargestellt mit einer Gelenkbuchse 2, die aus einem inneren Metallteil 3 einer umfangsseitig darauf angebrachten Elastomerschicht 4 einem Außenrohrteil 5 besteht und mit einem Aufnahmeauge 6.

Das innere Metallteil 3 weist als erstes Lagerteil beidseitig in Richtung der Lagerachse 7 Anschlusspratzen 8, 8' auf, mit denen durch Verschraubungen eine erste Verbindung, beispielsweise zu einem Fahrzeugaufbauteil oder einem Achslagerbock hergestellt werden kann. Das Aufnahmeauge 6 kann beispielsweise das Längsende eines Achslenkers sein.

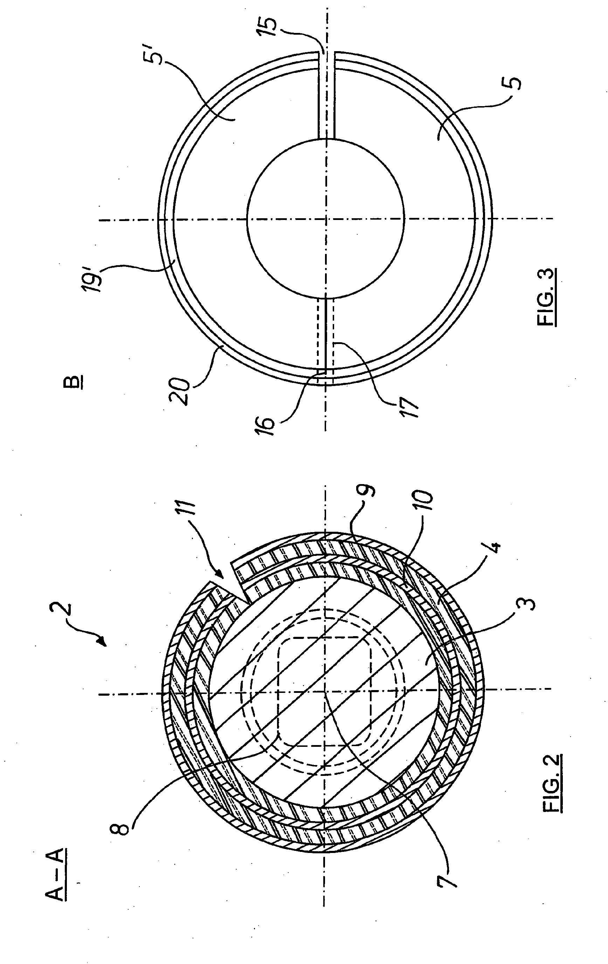

Die einzelnen Bauteile des Gelenklagers 1 werden weiter in Verbindung mit den Fig. 2 und 3 erläutert:
Aus dem Querschnitt der Gelenkbuchse 2 in Fig. 2 ist der zylindrische Aufbau zu ersehen, mit dem zylindrischen inneren Metallteil 3 und der darauf aufvulkanisierten Elastomerschicht 4, auf der ein Außenblech 9 als relativ dünnwandiges, gerolltes Rohrteil anvulkanisiert ist. In der Elastomerschicht 4 ist zudem ein Zwischenblech 10, ebenfalls als gerolltes Rohr, einvulkanisiert. Bei dem in Fig. 2 dargestellten, noch nicht ins Aufnahmeauge 6 eingepressten Herstellzustand weisen die Elastomerschicht 4, das Außenblech 9 und das Zwischenblech 10 einen Längsschlitz 11 auf, der sich V-förmig mit seiner Schlitztiefe bis zum inneren Metallteil 3 erstreckt.
Aus dem Längsschnitt von Fig. 1 ist zu ersehen, dass die umlaufende Elastomerschicht 4 weiter zu den Stirnseitenbereichen des inneren Metallteils unter Ausbildung von Elastomer-Axialstützelementen nach radial innen geführt ist, wobei in der dargestellten Ausführungsform zu beiden Stirnseiten umlaufende, angehaftete Elastomer-Abstützringe 12, 12' gebildet sind. Dort ist am inneren Metallteil eine radial äußere stufenförmige Ringausnehmung 13, 13' vorgesehen, in der (im dargestellten vorgespannten Zustand) jeweils der zugeordnete Elastomer-Abstützring 12, 12' einliegt.

Weiter ist aus Fig. 1 ersichtlich, dass das Außenblech 9 und das Zwischenblech 10 mit ihrer axialen Länge nicht bis in den Bereich der Elastomer-Abstützringe 12, 12' reichen.

Das Außenrohrteil 5 ist in beiden Stirnseitenbereichen relativ dickwandig und weist radial nach innen gerichtete Abstützwangen in der Art umlaufender Abstützwangenringe 14, 14' auf. Das Außenrohrteil 5 besteht aus zwei Außenrohrschalenteilen 5', 5" (siehe Fig. 3), die durch einen Längsspalt 15 getrennt und gegenüberliegend an einer, gegebenenfalls durch eine Materialverdünnung, gebildeten Scharnierachse 16 aufklappbar verbunden sind. Alternativ können zwei insgesamt voneinander getrennte Außenrohrschalenteile 5', 5" vorgesehen sein, wie dies mit den strichlierten Linien 17 angedeutet ist. Wie aus Fig. 1 zu ersehen, ist der Übergang an der Innenseite des Außenrohrteils 5 zum jeweiligen Abstützwangenring 12, 12' mit einer Bogenform 18, 18' abgerundet.

Zur Montage des Gelenklagers 1 wird das Außenrohrteil 5 mit seinen beiden Außenrohrschalenteilen 5', 5" (Fig. 3) auf die Gelenkbuchse 2 (Fig. 2) aufgesetzt, wobei der Außendurchmesser dieser Einheit aus Gelenkbuchse 2 und Außenrohrteil 5 größer als der Innendurchmesser des Aufnahmeauges 6 ist. Das Außenrohrteil 5 mit der Gelenkbuchse 2 wird dann unter Durchmesserverkleinerung und Aufbringung einer radialen Vorspannung in das Aufnahmeauge 6 axial eingepresst, wobei sich die Längsschlitze 11 und 15 schließen. Weiter werden dadurch auch die Elastomer-Abstützringe 12, 12' unter Aufbringung insbesondere auch einer axialen Vorspannung zwischen die Abstützwangenringe 14, 14' und die zugeordneten Stirnringseiten des inneren Metallteils 3 eingepresst. Durch die dadurch erzeugte radiale Vorspannung werden die Gelenkbuchse 2 und das Außenrohrteil 5 ortsfest im Aufnahmeauge 6 fixiert.

Wie aus Fig. 1 ersichtlich, ist das axiale Außenrohrteil 5 axial länger als das Aufnahmeauge 6 ausgebildet und steht beidseitig am Aufnahmeauge 6 über. In diesem jeweiligen Überstand ist stirnseitig im äußeren radialen Bereich eine umlaufende Nut 19, 19' angebracht, wodurch radial außen ein umlaufender Randsteg 20 gebildet ist, der unmittelbar nach dem Einpressvorgang noch axial absteht, wie im linken Bereich von Fig. 1 dargestellt und aus der Ansicht von Fig. 3 erkennbar. Dieser Randsteg 20 wird anschließend für eine axiale Abstützung zu einem an der Stirnseite des Aufnahmeauges 6 anliegenden Bördelrand 21 als Axialabstützung umgebördelt, wie im rechten Teil von Fig. 1 dargestellt.

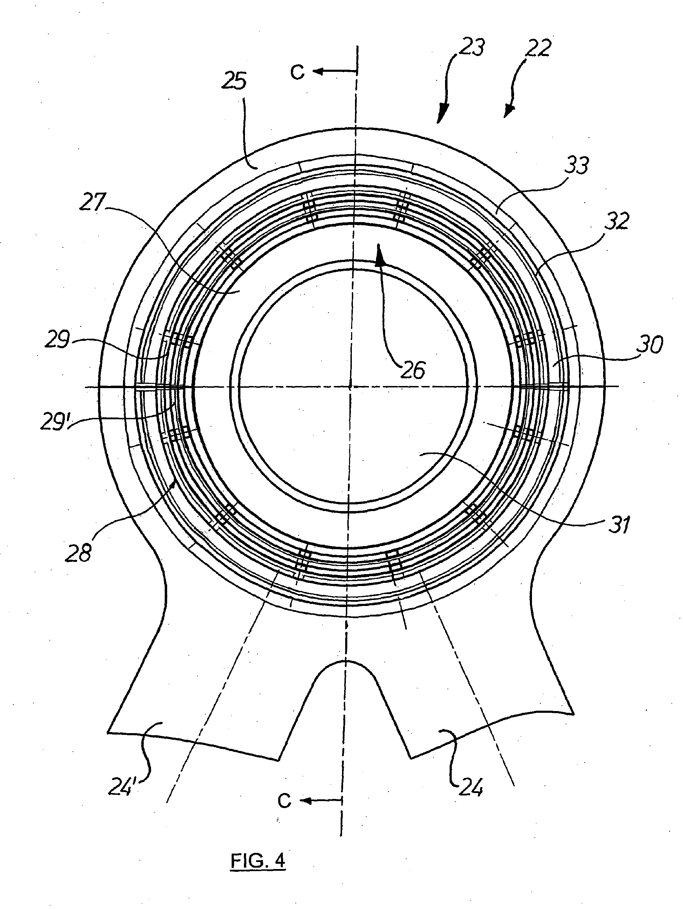

In Fig. 4 ist eine Draufsicht auf eine zweite Ausführungsform eines elastischen Lagers als Zentralgelenklager 22 eines Dreieckslenkers 23 gezeigt. Dieser besteht aus zwei Lenkerarmen 24, 24' und einem endseitigen zylindrischen Aufnahmeauge 25, in das ein Gummi-Metall-Element als Gelenkbuchse 26 eingepresst ist.

Die Gelenkbuchse 26 ist ähnlich der in Fig. 2 aufgebaut und besteht aus einem inneren Metallteil 27, einer Elastomerschicht 28 mit zwei Zwischenblechen 29, 29' und einem äußeren Metallteil als Außenrohrteil 30, welches hier fest mit der Elastomerschicht verbunden ist.

Das innere Metallteil 27 weist eine konische Bohrung 31 zur Aufnahme eines Anschlusszapfens auf und ist zudem an seinem Außenumfang in einem mittleren Längsbereich zylindrisch ausgebildet, mit jeweils zur Stirnseite hin abfallenden Bereichen mit kleinerem Durchmesser. Eine entsprechende Negativform hat auch die Innenkontur des Außenrohrteils 30, so dass dieses in den Stirnseitenbereichen relativ dickwandig ist. Dort sind, ähnlich wie bei der ersten Lagerausführung, beidseitig im radial äußeren Bereich umlaufende, in Axialrichtung eingebrachte Nuten 32, 32' angeordnet, mit vor und während des Einpressvorgangs axial ausgerichteten Randstegen. Diese stehen auch hier axial über die Länge des Aufnahmeauges zu beiden Seiten vor und werden für eine Axialabstützung und Axialsicherung nach radial außen jeweils als Bördelrand 33, 33' auf die Stirnseitenbereiche des Aufnahmeauges 25 umgebördelt.

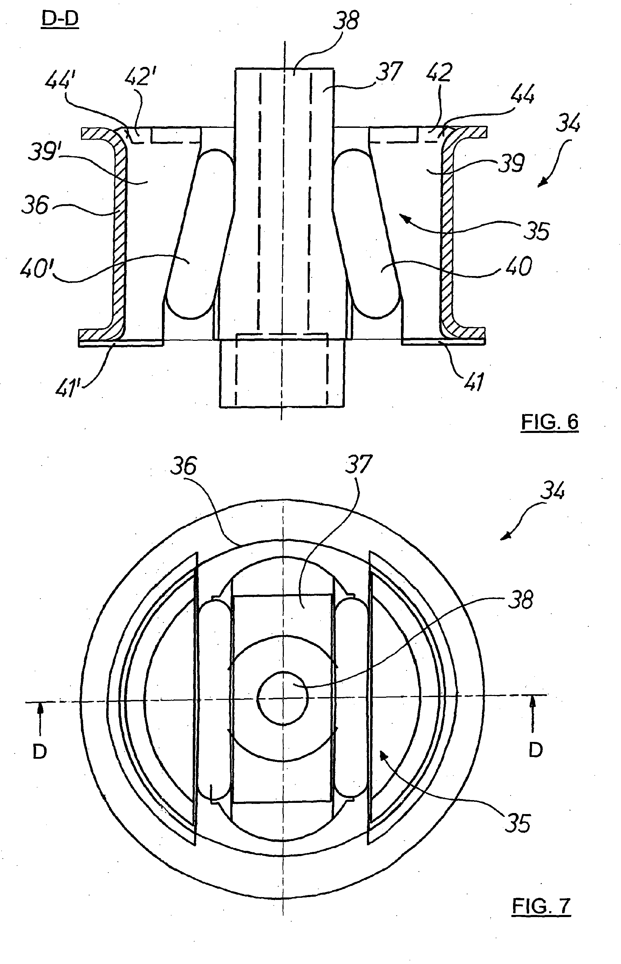

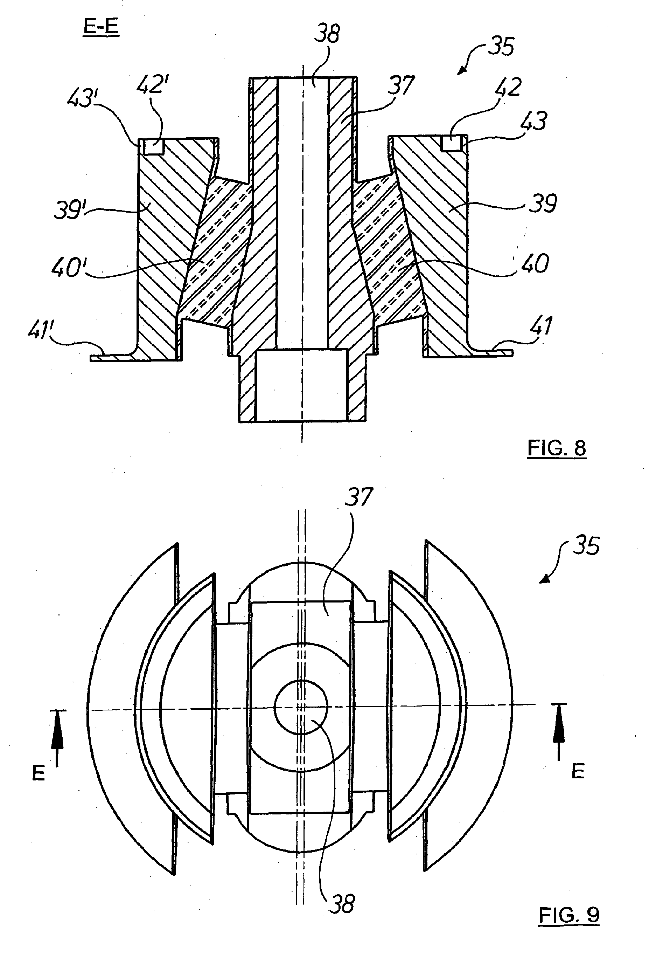

Im Längsschnitt nach Fig. 6 ist eine dritte Ausführungsform eines montierten elastischen Lagers als V-Lager 34 dargestellt, wobei hier in einer speziellen Ausführungsform die V-Spitze nach oben weist. Auch hier ist ein Elastomer-Metallteil 35, wie im Herstellzustand in den Fig. 8 und 9 gezeigt, in ein insgesamt zylindrisches Aufnahmeauge 36 als Lagergehäuse eingepresst.

Das Elastomer-Metallteil 35 besteht aus einem inneren Metallteil 37, mit einer zentralen Anschlussbohrung 38 und einem zweigeteilten äußeren Metallteil, welches bezüglich des inneren Metallteils 37 aus gegenüberliegenden, dickwandigen, an den Außenflächen kreisbogenförmig ausgeführten Abstützteilen 39, 39' besteht. Auch die Elastomerschicht ist hier zweiteilig ausgebildet und besteht aus zwei sowohl mit den Abstützteilen 39, 39' als auch mit dem inneren Metallteil 37 verbundenen Elastomerpaketen 40, 40'. In den Abstützteilen 39, 39' und am inneren Metallteil 37 sind die Schrägflächen für die V-Anstellung der Elastomerpakete 40, 40' geformt.

Wie insbesondere aus den Fig. 6 und 8 zu ersehen, ist an den Abstützteilen 39, 39' jeweils ein radial abstehender Anschlagkragen ausgebildet. An der gegenüberliegenden oberen Stirnseite der Abstützteile 39, 39' ist dagegen jeweils eine axial angebrachte Nut 42, 42' zur Ausbildung eines Randstegs 43, 43' angebracht.

Wie aus Fig. 6 erkennbar, wird das Elastomer-Metallteil 35 (von unten her) in das Aufnahmeauge 36 eingepresst, bis die Anschlagkrägen 41, 41' am Aufnahmeauge 36 stirnseitig anliegen. Die dann noch axial abstehenden Randstege 43, 43' werden dann als Axialsicherungen nach radial außen zu den Bördelrändern 44, 44' umgebördelt.

## Patentansprüche

1. Elastisches Lager, insbesondere für den Nutzfahrzeugbau,
- mit einem Elastomer-Metallteil, bestehend aus einem inneren Metallteil (3; 27; 37) als ersten Lagerteil,
- aus wenigstens einer das innere Metallteil (3; 27; 37) zumindest teilweise umgebenden Elastomerschicht (4; 28; 40; 40'),
- aus wenigstens einem die Elastomerschicht (4; 28; 40, 40') zumindest teilweise umgebenden äußeren Metallteil (5; 30; 39, 39'), und
- mit einem zumindest einseitig in Richtung einer Lagerachse offenen Lagergehäuse (6; 25; 36), in das das Elastomer-Metallteil unter Komprimierung und Aufbau einer Vorspannung in der Elastomerschicht (4; 28; 40, 40') eingepresst ist, wobei im eingepressten Zustand zumindest ein Stirnseitenbereich des äußeren Metallteils (5; 30; 39, 39') im Stirnseitenbereich des Lagergehäuses (6; 25; 36) liegt,
**dadurch gekennzeichnet,**
**dass** in den zumindest einen äußeren Stirnseitenbereich des wenigstens einen dickwandig hergestellten, äußeren Metallteils (5; 30; 39, 39') in Axialrichtung eine Nut (19, 19'; 32, 32'; 42, 42') unter Ausbildung eines radial äußeren Randstegs (20; 43, 43') eingearbeitet ist, wobei dieser Randsteg (20; 43, 43') im Herstellzustand und beim Einpressvorgang in das Lagergehäuse (6; 25; 36) axial absteht und nach dem Einpressvorgang für eine Axialabstützung und Axialsicherung als Bördelrand (21; 33, 33'; 44, 44') zumindest abschnittweise auf den Stirnseitenbereich des Lagergehäuses (6; 25; 36) nach radial außen umgebördelt ist.

2. Elastisches Lager nach Anspruch 1, **dadurch gekennzeichnet, dass** sich die Nut (19, 19'; 32, 32'; 42, 42') und damit der Bördelrand (21; 33, 33'; 44, 44') über die gesamte Länge angrenzender Stirnseitenbereiche oder über eine Teillänge angrenzender Stirnseitenbereiche des wenigstens einen äußeren Metallteils (5; 30; 39, 39') und des Lagergehäuses (6; 25; 36) erstreckt.

3. Elastisches Lager nach Anspruch 1 oder 2, **dadurch gekennzeichnet, dass** die Axialabstützung mit dem Bördelrand (44, 44') an einem Stirnseitenbereich des Lagergehäuses (36) ausgebildet ist, und
dass am gegenüberliegenden Stirnseitenbereich ebenfalls eine entsprechende Axialabstützung mit einem Bördelrand und/oder ein Axialanschlag (41, 41') am wenigstens einen äußeren Metallteil (39, 39') vorgesehen ist.

4. Elastisches Lager nach einem der Ansprüche 1 bis 3, **dadurch gekennzeichnet, dass** das äußere Metallteil (5; 30; 39, 39') zumindest im Bördelrandbereich axial jeweils etwa um die Tiefe der Nut aus dem Lagergehäuse (6; 25; 36) vorsteht.

5. Elastisches Lager nach einem der Ansprüche 1 bis 4, **dadurch gekennzeichnet, dass** das innere Metallteil (3; 27) und das Lagergehäuse als Aufnahmeauge (6; 25) zylindrisch ausgeführt sind und am innerem Metallteil (3; 27) eine umfangsseitig umlaufende Elastomerschicht (4; 28) festhaftend angebracht ist, und
dass das äußere Metallteil ein zumindest im Stirnbereich dickwandiges Außenrohrteil (5; 30) ist.

6. Elastisches Lager nach Anspruch 5, **dadurch gekennzeichnet, dass** das Außenrohrteil (30) festhaftend mit der Elastomerschicht (28) verbunden ist.

7. Elastisches Lager nach Anspruch 5, **dadurch gekennzeichnet, dass** auf der Elastomerschicht (4) ein radial äußeres umlaufendes Außenblech (9) angehaftet, vorzugsweise anvulkanisiert ist und das Außenrohrteil (5) als separates einteiliges oder mehrteiliges Bauteil darauf aufgesteckt und mit in das Aufnahmeauge (6) eingepresst ist.

8. Elastisches Lager nach einem der Ansprüche 5 bis 7, **dadurch gekennzeichnet, dass** im nicht vorgespannten Herstellzustand die Elastomerschicht (4) und gegebenenfalls ein Außenblech (9) sowie wenigstens ein in die Elastomerschicht (4) eingebettetes Zwischenblech (10) und das Außenrohrteil (5) einen Längsschlitz (11) aufweisen, der sich vorzugsweise mit seiner Schlitztiefe bis zum inneren Metallteil (3) erstreckt, wobei im fertig montierten Zustand die vorstehenden Teile axial unter Aufbringung einer radialen Vorspannung in der Elastomerschicht (4) in das Aufnahmeauge (6) bei geschlossenem Längsschlitz (11) eingepresst sind.

9. Elastisches Lager nach einem der Ansprüche 1 bis 4, **dadurch gekennzeichnet, dass** das äußere dickwandige Metallteil aus wenigstens zwei bezüglich des inneren Metallteils (37) gegenüberliegenden Außenstützteilen (39, 39') und die Elastomerschicht als bezüglich des inneren Metallteils (37) gegenüberliegende und sowohl mit dem inneren Metallteil (37) als auch jeweils mit den zugeordneten Abstützteilen (39, 39') verbundene Elastomerpakete (40, 40') ausgebildet sind.

10. Elastisches Lager nach Anspruch 9, **dadurch gekennzeichnet, dass** zwei Elastomerpakete (40, 40') in Lagerachsrichtung gesehen eine V-Form oder vier Elastomerpakete eine X-Form bilden.

11. Elastisches Lager nach Anspruch 9 oder 10, **dadurch gekennzeichnet, dass** das Elastomermaterial ein vulkanisierbares Gummimaterial ist.

12. Elastisches Lager nach einem der Ansprüche 1 bis 11, **dadurch gekennzeichnet, dass** am inneren Metallteil (3) einseitig oder beidseitig Anschlusszapfen oder Anschlusspratzen (8, 8') angebracht sind oder das innere Metallteil (27; 37) ein Innenrohrteil mit einer Bohrung (31; 38) zur Aufnahme einer Anschlussverschraubung oder eines Konuszapfens ist.
